# EUROPEAN PATENT SPECIFICATION

(11) **EP 1 826 532 B1**
(45) Date of publication and mention of the grant of the patent: **24.04.2013**
(21) Application number: 07103035.7
(22) Date of filing: 26.02.2007
(51) Int. Cl.: G01C 21/36, G08G 1/0969

(54) **Navigation system**
Navigationssystem
Système de navigation

(30) Priority: 28.02.2006 JP 2006051636
(43) Date of publication of application: 29.08.2007
(73) Proprietor: AISIN AW CO., LTD., Anjo-shi, Aichi 444-1192 (JP)
(72) Inventor: Tooyama, Yasuhiro c/o Aisin AW Co., Ltd., Aichi 444-8564 (JP); Minami, Toshiaki c/o Aisin AW Co., Ltd., Aichi 444-8564 (JP); Aoyanagi, Naoko c/o Aisin AW Co., Ltd., Aichi 444-8564 (JP)
(74) Representative: Vossius & Partner

(56) References cited:
- EP-A- 1 621 851
- JP-A- 10 283 589
- JP-A- 2004 108 849

## Description

The present invention relates to a navigation system that displays map information and displays a guidance route to a destination on the map, particularly a navigation system that provides guidance that includes congestion information based on received road traffic information.

In recent years, a navigation system is frequently installed in a vehicle to execute guidance for driving the vehicle, so as to make it possible for the driver to reach a desired destination easily. The navigation system is a system that is capable of detecting the vehicle's current position using a GPS receiver or the like, then obtaining map data that correspond to the current position from a storage medium such as a DVD-ROM, hard disk, or the like, or through a network, and displaying the map data on a liquid crystal display. In addition to reading the map data that include the vehicle's current position from the storage medium or the like, drawing a map image of the area surrounding the vehicle's current position based on the map data, and displaying the map image on a display system, the navigation system displays a superimposed vehicle position mark on the map image, then scrolls the map image as the vehicle moves or keeps the map image stationary and moves the vehicle position mark, such that the driver can tell at a glance the location where the vehicle is traveling.

Here, different types of navigation systems are proposed that provide guidance that includes congestion information based on received road traffic information.

For example, a navigation system exists (as disclosed in Japanese Patent Application Publication No. JP-A-10-283589, paragraphs (0007) to (0020), FIGS. 1 to 5) that is configured such that it draws on a display screen a map corresponding to a host vehicle position, receives road traffic volume information from an external source, and displays road traffic volume circumstances on the map. The navigation system also receives from the external source road traffic volume information that indicates lengths of congested sections of monitored roads with specific predetermined areas (meshes), as well as the congestion levels. The navigation system uses the total length of the monitored roads within each area, the lengths of the congested sections, and the congestion levels to compute the road traffic volume in a given area. The navigation system then controls the coloring or brightness levels of the map image of the area such that it is possible to identify the road traffic volume.

However, the navigation system described in Japanese Patent Application Publication No. JP-A-10-283589 displays the average road traffic volume, that is, the average congestion level, for an entire area (mesh). Therefore, when the map information display area is a wide area display at a scale that is reduced to at least a specified level (for example, a wide area display that allows an entire metropolitan area to be viewed), many roads within the area (mesh) are omitted from the display. It is therefore difficult to judge accurately which roads and which localities within the area (mesh) have high traffic volume or are congested. Also, because the road traffic volume is averaged, the displayed road traffic volume is not accurate.

It is an object of the present invention to provide a navigation system that solves the problems described above by accurately displaying congestion information for road locations that are omitted from the display, thereby making it possible for a user to judge accurately which roads and which localities have high traffic volume or are congested, even when the map information display area is a wide area display at a scale that is reduced to at least a specified level. This object is achieved with the features of the claims.

The navigation system having the configuration according to the first aspect of the present invention obtains the congestion information related to the display area for the map information based on the received traffic information, then extracts from the congestion information the congestion information group with the specified congestion level. Based on the road links contained in the congestion information items in the congestion information group, the navigation system also creates the overlap determination areas that extend in both the transverse and the longitudinal directions for specified distances from the respective road links, then groups the congestion information items whose overlap determination areas overlap. Next, the navigation system creates the equal congestion level area by connecting the overlap determination areas that correspond to the grouped congestion information items and displays the equal congestion level area superimposed on the display area for the map information such that the equal congestion level area is identifiable.

In this manner, the equal congestion level area is constructed by joining the overlap determination areas, which are created based on the individual road links contained in the individual congestion information items in the congestion information group with the specified congestion level and which extend in both the transverse and longitudinal directions from their respective road links, so even when the display area for the map information is reduced in scale to at least a specified level for a wide area display, the equal congestion level areas are formed such that they follow the displayed roads. It is therefore possible for the user to instantaneously recognize which roads in which areas are busy or congested and to easily determine, based on the map information, where a detour is that will bypass the congestion. Also, even when the display area for the map information is reduced in scale to at least a specified level for a wide area display, such that the display omits some roads, the equal congestion level areas are formed by joining the overlap determination areas, which correspond to road links for congestion information items in road positions that are omitted from the display, so it is possible to display the congestion information items in the road positions that are omitted from the display, and to display them in a form that follows the roads that are omitted from the display. It is therefore possible for the user to judge more accurately which roads in which areas are busy or congested.

Also, the navigation system according to the second aspect of the present invention creates the equal congestion level areas for the plurality of respective types of the congestion levels and displays the plurality of types of the equal congestion level areas superimposed on the display area for the map information such that the equal congestion level areas can be distinguished from one another. Therefore, even when the display area for the map information is reduced in scale to at least a specified level for a wide area display, the equal congestion level areas that correspond to the respective congestion levels are displayed such that they can be distinguished from one another.

In this manner, it is possible to display in detail the congestion information items in road positions that are omitted from the display, and it is possible to display the state of distribution of the congestion levels. It is therefore possible for the user to judge more accurately which roads in which areas are busy or congested.

Also, the navigation system according to the third aspect of the present invention displays mutually differentiated display colors for the plurality of types of the equal congestion level areas superimposed on the display area for the map information. Therefore, even when the display area for the map information is reduced in scale to at least a specified level for a wide area display, it is possible for the user to recognize each displayed equal congestion level area instantaneously and to easily determine, based on the map information, where a detour is that will bypass the congestion.

Also, in the navigation system according to the fourth aspect of the present invention, where the road links contained in congestion information items for which the overlap determination areas do not overlap are directly connected in a road network, the navigation system creates the virtual link that joins the road links. Also, based on the virtual link, the navigation system creates the joining overlap determination area that extends in both the transverse and longitudinal directions for a specified distance from the virtual link, and the navigation system creates the equal congestion level area by joining the joining overlap determination area with the overlap determination areas that overlap the joining overlap determination area. This makes it possible to display an equal congestion level area without any dips (indentations), distortions, or the like.

Also, in the navigation system according to the fifth aspect of the present invention, when the display area for the map information is reduced in scale to at least a specified level for a wide area display, the equal congestion level area is displayed superimposed on the display area for the map information. Therefore, even when many roads are omitted from the display, the congestion information in the road positions that are omitted from the display is displayed accurately, so it is possible for the user to accurately judge which roads in which areas are busy or congested.

A navigation system according to the present invention will be explained in detail below, based on a concrete embodiment and with reference to the drawings.
FIG. 1 is a block diagram of a navigation system according to an embodiment of the present invention;
FIG. 2 is an explanatory diagram of communication between the navigation system and a road traffic information center (VICS^{®});
FIG. 3 is a main flowchart that shows congestion information display processing that the navigation system executes and that displays congestion information when a display area for map information is a wide area display at a scale that is reduced to at least a specified level;
FIG. 4 is a flowchart that shows a sub-process of area information display processing in FIG. 3;
FIG. 5 is a flowchart that shows a sub-process of the area information display processing in FIG. 3;
FIG. 6 is an explanatory diagram that explains processing that proceeds directly from step S115 to step S116 in FIG. 5;
FIG. 7 is an explanatory diagram that explains processing that proceeds directly from step S116 to step S 117 in FIG. 5;
FIG. 8 is an explanatory diagram that explains processing that proceeds directly from step S115 to step S 117 in FIG. 5; and
FIG. 9 is a diagram that shows an example of a congestion information display and a display screen for a wide area display (1:160,000 scale diagram) at a reduced scale of 1/160,000 that is implemented at step S126.

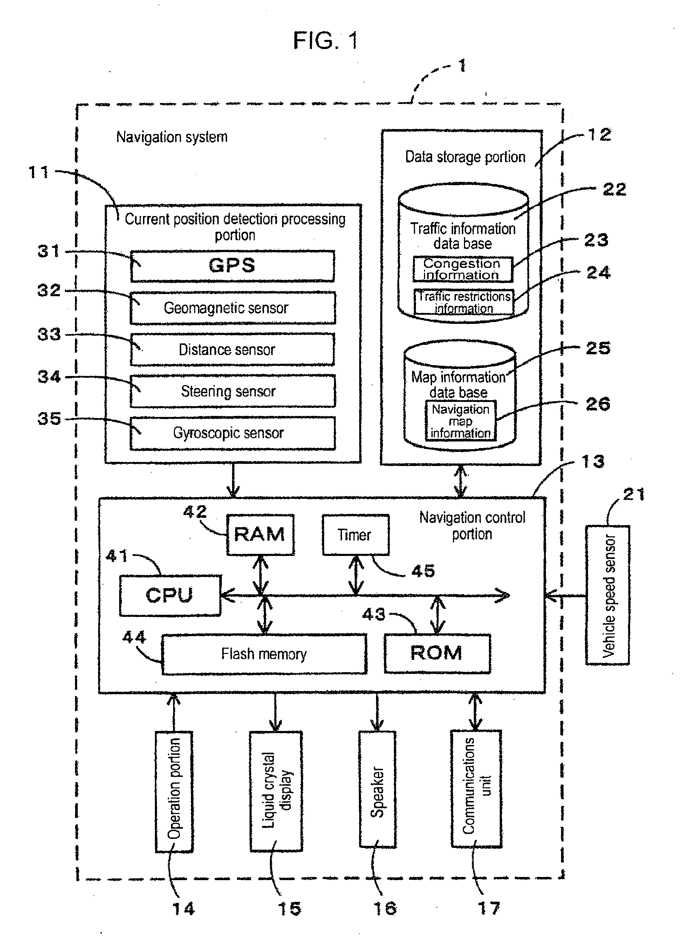

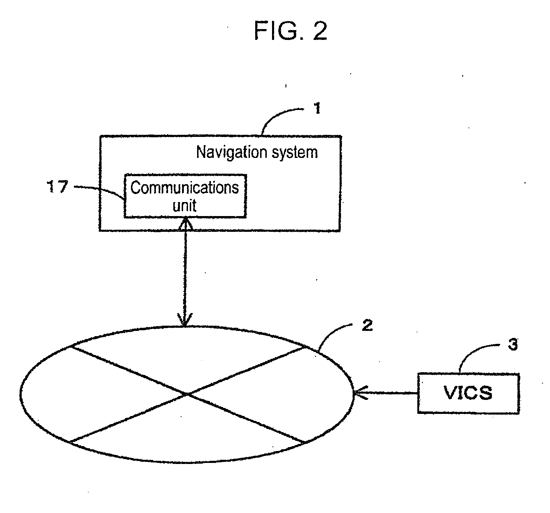

First, the overall configuration of the navigation system according to the present invention will be explained using FIGS. 1 and 2. FIG. 1 is a block diagram of the navigation system 1 according to this embodiment. FIG. 2 is an explanatory diagram of communication between the navigation system 1 and a road traffic information center (Vehicle Information and Communication System (VICS^{®})) 3.

As shown in FIG. 1, the navigation system 1 according to this embodiment is made up of a current position detection processing portion 11, a data storage portion 12, a navigation control portion 13, an operation portion 14, a liquid crystal display 15, a speaker 16, and a communications unit 17. The current position detection processing portion 11 detects a current position of a host vehicle (hereinafter called a host vehicle position). The data storage portion 12 stores various types of data. The navigation control portion 13 executes various types of computational processing based on information that is input. The operation portion 14 receives operations from the driver. The liquid crystal display 15 displays information such as maps and the like for the operator. The speaker 16 outputs voice guidance pertaining to route guidance, traffic restrictions information (described later), and congestion information. The communications unit 17 executes communications with an information center such as the road traffic information center (VICS®) 3. Also, a vehicle speed sensor 21 that detects a running speed of the host vehicle is connected to the navigation control portion 13.

As shown in FIG. 2, the navigation system 1 is connected to the road traffic information center (VICS^{®}) 3 via a network 2. The navigation system 1 is configured such that it can receive road traffic information from the road traffic information center (VICS®) 3 via the network 2 at specified time intervals. The road traffic information includes information related to road congestion, which is created based on information gathered from the police, the traffic control systems of the Japan Highway Public Corporation, and the like, as well as traffic restrictions information and the like. For example, the road traffic information may be detailed information such as road congestion information about congestion on a road, information on traffic restrictions due to road work, construction work, or the like, or other road traffic information. In the case of the road congestion information, the detailed information includes a VICS® link ID, described later, an actual length of the congested section, a congestion level (ranked as not congested, busy, congested, or the like), a vehicle speed within the congested section, a travel time, a direction of travel in a congested lane, an estimated time for an end to the congestion, and the like. In the case of the traffic restrictions information, the detailed information includes the VICS® link ID, described later, a period during which the road work, construction work, or the like will continue, types of traffic restrictions, such as a closed road, alternating directions of traffic on one side of a road, a lane restriction, and the like, time periods for traffic restrictions, and the like.

Communications systems that can be used as the network 2 include, for example, a local area network (LAN), a wide area network (WAN), an intranet, a mobile telephone network, a land-line telephone network, a public communications network, a dedicated communications network, the Internet, and the like. A communications system can also be used that uses communications satellite broadcasting or broadcast satellite broadcasting by a broadcast satellite, digital terrestrial television broadcasting, FM multiplex broadcasting, or the like. A communications system such as a non-stop electronic toll collection (ETC) system, a dedicated short-range communication (DRSC) system, or the like that is used in Intelligent Transportation Systems (ITS) can also be used.

The various component elements that make up the navigation system 1 will be explained below based on FIG. 1. As shown in FIG. 1, the current position detection processing portion 11 includes a GPS 31, a geomagnetic sensor 32, a distance sensor 33, a steering sensor 34, a gyroscopic sensor 35 as a direction detection portion, an altimeter (not shown), and the like. The current position detection processing portion 11 is thus capable of detecting the current host vehicle position, a vehicle direction, a distance to a target point (for example, an intersection), and the like.

Specifically, the GPS 31 detects the current host vehicle position on the Earth, as well as the current time, by receiving radio signals transmitted from an artificial satellite. The geomagnetic sensor 32 detects the host vehicle's direction by measuring geomagnetism. The distance sensor 33 detects a distance or the like between specified positions on the road. The distance sensor 33 can be, for example, a sensor that measures a revolution speed of a wheel (not shown) of the host vehicle and then computes a distance based on the measured revolution speed, or the distance sensor 33 can be a sensor that measures acceleration and then computes a distance by integrating the acceleration twice.

The steering sensor 34 detects the steering angle of the host vehicle. The steering sensor 34 can be, for example, an optical rotation sensor or rotation resistance sensor that is attached to a rotating portion of the steering wheel (not shown), an angle sensor that is attached to a wheel, or the like.

The gyroscopic sensor 35 detects the angle of rotation of the host vehicle. The gyroscopic sensor 35 can be, for example, a gas rate gyroscope, a vibration gyroscope, or the like. The direction of the host vehicle can be detected by integrating the rotation angle that is detected by the gyroscopic sensor 35.

The data storage portion 12 includes a hard disk (not shown), which serves as an external storage system and storage medium, a traffic information data base 22, which is stored on the hard disk, a map information data base 25, and a recording head (not shown), which reads specified programs and the like and writes specified data to the hard disk. Note that in this embodiment, the hard disk is used as the external storage system and storage medium for the data storage portion 12, but a magnetic disk such as a flexible disk or the like can be used as the external storage system instead of the hard disk. A memory card, a magnetic tape, a magnetic drum, a CD, an MD, a DVD, an optical disk, a magneto-optical disk, a smart card, an optical card, or the like can also be used as the external storage system.

Congestion information 23 is stored in the traffic information data base 22. The congestion information 23 is created from road traffic information pertaining to current road congestion, this information being made up of the actual length of the congested section, the congestion level (ranked as not congested, busy, congested, or the like), the vehicle speed within the congested section, the travel time, the direction of travel in the congested lane, the estimated time for an end to the congestion, and the like, all received from the road traffic information center (VICS®) 3. Traffic restrictions information 24 is also stored in the traffic information data base 22. The traffic restrictions information 24 is created from road traffic information pertaining to traffic restrictions due to road work, construction work, and the like, the information being received from the road traffic information center (VICS®) 3.

The VICS® link ID is included in each type of road traffic information received from the road traffic information center (VICS®) 3, along with information such as classification information, a position, a length of a congested section, a congestion level, and the like. The VICS® link ID is an identification number that is assigned to VICS® links, which are divided by specified intersections on roads and serve as standardized links for driving guidance purposes. Note that the road traffic information includes information such as the coordinates of a starting point and an ending point for each VICS® link, the distance from the starting point to the ending point, and the like.

Here, a road (link) that is stored in the map information data base 25 and a VICS® link are not the same thing. (Generally, the roads (links) are more finely divided than are the VICS® links.) Accordingly, the traffic information data base 22 includes a conversion table (a comparison table) for correlating each link ID that is assigned as an identification number for a road (a road link) to a VICS® link ID, so that, based on the VICS® link ID, the corresponding link IDs can be specified. Therefore, when the navigation system 1 receives a VICS® link ID from the road traffic information center (VICS^{®}) 3, the navigation system 1 can specify, based on the VICS® link ID, a section of road for which road traffic information such as congestion information and the like should be displayed. The VICS® link ID for the road traffic information received from the road traffic information center (VICS®) 3 that pertains to current road congestion and the like is converted to a link ID and stored as congestion information 23. Also, the VICS® link ID for the road traffic information received from the road traffic information center (VICS®) 3 that pertains to traffic restrictions and the like is converted to a link ID and stored as traffic restrictions information 24.

Navigation map information 26, which the navigation system 1 uses for driving guidance and route searching, is stored in the map information data base 25. Here, the navigation map information 26 is made up of various types of information that are required for route guidance and map displays, including, for example, newly built road information for specifying each newly built road, map display data for display maps, intersection data pertaining to each intersection, node data pertaining to each node, link data pertaining to each road (road link), which is one type of facility, search data for searching for a route, point-of-interest (POI) data pertaining to points of interest such as shops and the like, which are one type of facility, search data for searching for a location, and so on.

Also, the contents of the map information data base 25 are updated by using the communications unit 17 to download update data that is transmitted from a map information transmission center (not shown in the drawings).

Here, the map display data in particular are basically partitioned into two-dimensional meshes measuring 10 kilometers by 10 kilometers, and each mesh is then further divided into units that are one-fourth (side length = 1/2), one-sixteenth (side length = 1/4), and one-sixty-fourth (side length = 1/8) the size of the basic mesh. The units are established for individual areas such that the data volume for each unit is roughly the same. The smallest unit is the one-sixty-fourth size, which measures approximately 1.25 kilometers on a side.

The node data include a branching point on an actual road (including a four-way intersection, T intersection, or the like), node point coordinates (position), which are set at specified intervals according to the radius of curvature and the like of each road, a node attribute, which indicates whether the node corresponds to an intersection or other feature, a connecting link numbers list, which is a list of the link IDs that are the identification numbers of links that connect to the node, an adjoining node numbers list, which is a list of node numbers of nodes that are joined to the node via links, data pertaining to the height (elevation) of the node point, and the like.

The link data include data on each road link (hereinafter called a link) that makes up a road. For each road in a link, the data indicate the road width, slope, cant, bank, road surface conditions, number of lanes, places where the number of lanes decreases, places where the road width decreases, railroad crossings, and the like. For a corner, the data indicate the radius of curvature, intersection, T-intersecting roads, entrance to and exit from the corner, and the like. For road attributes, the data indicate a downhill road, an uphill road, or the like. For a road type, the data indicate an ordinary road, such as a national road, a prefectural road, a narrow street, or the like, or a toll road, such as a national expressway, a metropolitan expressway, an ordinary toll road, a toll bridge, or the like. For toll roads, the data also include information on access roads (ramps) at expressway entrances and exits, toll collection points (interchanges), and the like.

The search data are data that are used to search for and display a route to a set destination. They include cost data, which are used to compute a search cost and are made up of a cost of passing through a node (hereinafter called a node cost), a cost of a link that is a component of a road (hereinafter called a link cost), and the like. The search data also include route display data for displaying a guidance route, which is selected by route searching, on the map on the liquid crystal display 15.

The POI data include data pertaining to points of interest such as hotels, hospitals, gas stations, parking lots, tourist facilities, and the like in each region, stored along with an ID for identifying each point of interest. Note that voice output data are also stored in the map information data base 25 for the purpose of outputting specified information through the speaker 16 of the navigation system 1.

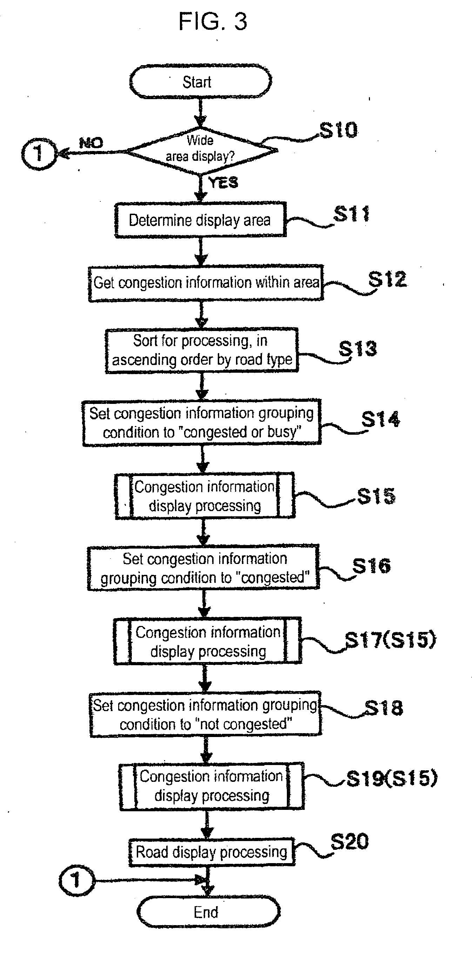

As shown in FIG. 1, the navigation control portion 13 of the navigation system 1 includes a CPU 41, internal storage units such as a RAM 42, a ROM 43, a flash memory 44, and the like, a timer 45, and the like. The CPU 41 serves as a computation unit and a control unit that executes overall control of the navigation system 1. The RAM 42 is used as a working memory when the CPU 41 executes various types of computational processing, and when route searching is executed, the RAM 42 also stores route data, link IDs for congestion information (described later), and the like. The ROM 43 stores control programs, as well as a congestion information display program (refer to FIG. 3) that displays congestion information as guidance when a display area for map information (described later) is reduced in scale (for example, to a scale of 1/100,000) for a wide area display (for example, a display of an entire metropolitan area). The flash memory 44 a program that is read from the ROM 43. The timer 45 measures time. Note that semiconductor memory, magnetic core, or the like may be used for the RAM 42, the ROM 43, the flash memory 44, and the like. Also, a microprocessor unit or the like can be used instead of the CPU 41 for the computation unit and the control unit.

In this embodiment, various types of programs are stored in the ROM 43, and various types of data are stored in the data storage portion 12. However, it is also possible to read the programs, data, and the like from the same external storage system, memory card, or the like and to write the programs, data, and the like to the flash memory 44. It is also possible to update the programs, data, and the like by replacing the memory card or the like.

Also, each of the peripheral devices (actuators), that is, the operation portion 14, the liquid crystal display 15, the speaker 16, and the communications unit 17, is electrically connected to the navigation control portion 13.

The operation portion 14 is made up of a plurality of operation switches, such as various types of keys and the like, and is operated when the user corrects the current position when starting to drive, when the user inputs a departure point as a guidance starting point or a destination as a guidance ending point, when the user executes a search for information on facilities, and so on. Based on the switch signals that are output by the pressing or the like of each switch, the navigation control portion 13 controls the execution of the corresponding types of operations. Note that a keyboard, a mouse, a bar code reader, a remote control unit for remote operation, a joystick, a light pen, a stylus pen, or the like can be used as the operation portion 14. The operation portion 14 can also be configured as a touch panel on the face of the liquid crystal display 15.

The liquid crystal display 15 displays operation guidance, an operation menu, key guidance, a guidance route from the current position to a destination, guidance information along the guidance route, traffic information, news, weather forecasts, the time, e-mail, television programs, and the like. Note that a CRT display, a plasma display, or the like can be used instead of the liquid crystal display 15, as can a hologram unit or the like that projects a hologram onto the front windshield of the vehicle.

The speaker 16 outputs voice guidance for driving along the guidance route and voice guidance on congestion information, based on instructions from the navigation control portion 13. For example, the guidance may be "Turn right 200 meters ahead at XX intersection," "3 kilometers of congestion ahead," or the like. Note that in addition to a synthesized voice, the sounds output from the speaker 16 can be various sound effects or various types of guidance information that are pre-recorded on tape, in memory, or the like.

The communications unit 17 is a beacon receiver that receives road traffic information as radio beacon signals, optical beacon signals, or the like from radio beacon units, optical beacon units, or the like that are disposed along a road. The road traffic information is made up of various types of information that are transmitted from an information center such as the road traffic information center (VICS®) 3 or the like, including congestion information, traffic restrictions information, parking lot information, traffic accident information, traffic volume in a service area, and the like. The communications unit 17 is also a network device that can communicate in a communications system such as a communications network that serves as the network 2, such as a LAN, a WAN, an intranet, a mobile telephone network, a land-line telephone network, a public communications network, a dedicated communications network, the Internet, or the like. The communications unit 17 also includes an FM receiver that receives FM multiplex information as an FM multiplex broadcast via an FM broadcasting station, the FM multiplex information being made up of information such as news, weather forecasts, and the like, in addition to information from the road traffic information center (VICS®) 3. Note that the beacon receiver and the FM receiver are disposed in a single unit that serves as a VICS® receiver, but they may be also disposed separately.

Next, based on FIGS. 3 to 9, congestion information display processing will be explained that displays congestion information when the display area for map information is a wide area display (for example, a display of an entire metropolitan area) at a scale that is reduced to at least a specified level (for example, to a scale of 1/100,000), the congestion information display processing being executed by the CPU 41 in the navigation system 1 having the configuration described above.

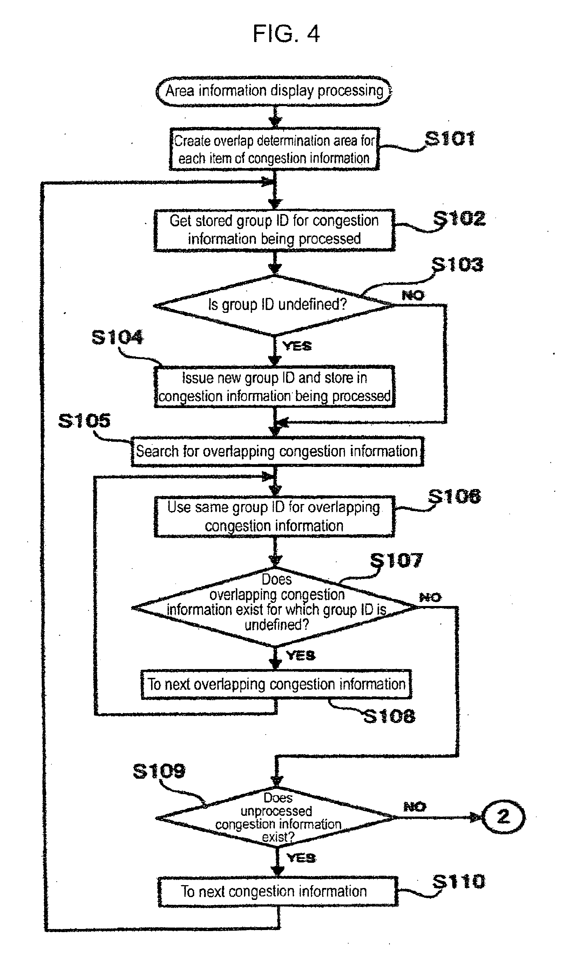

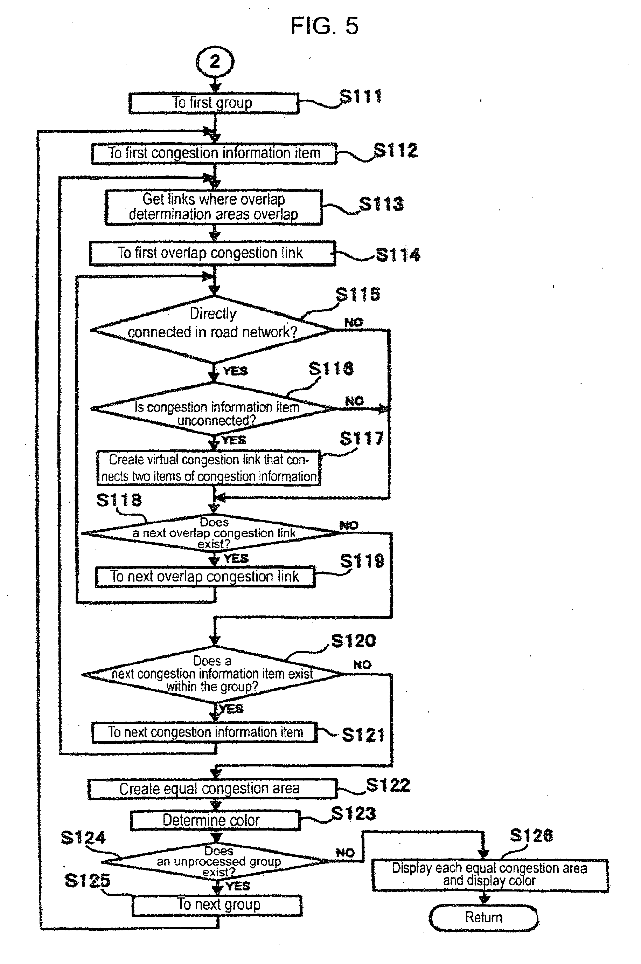

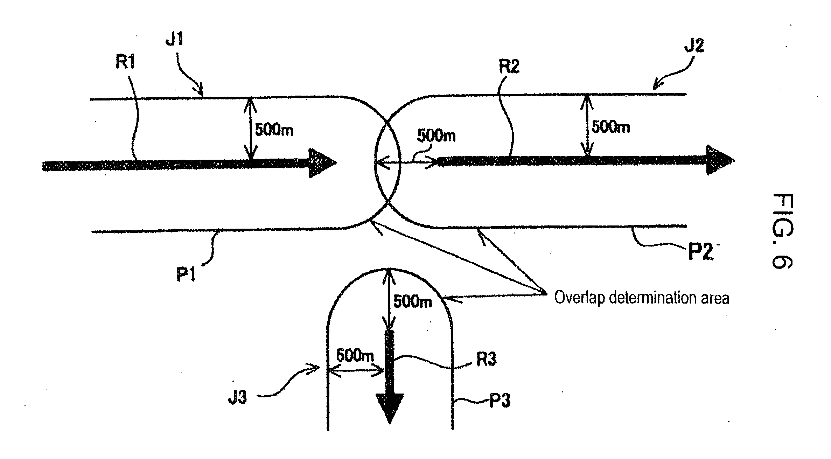

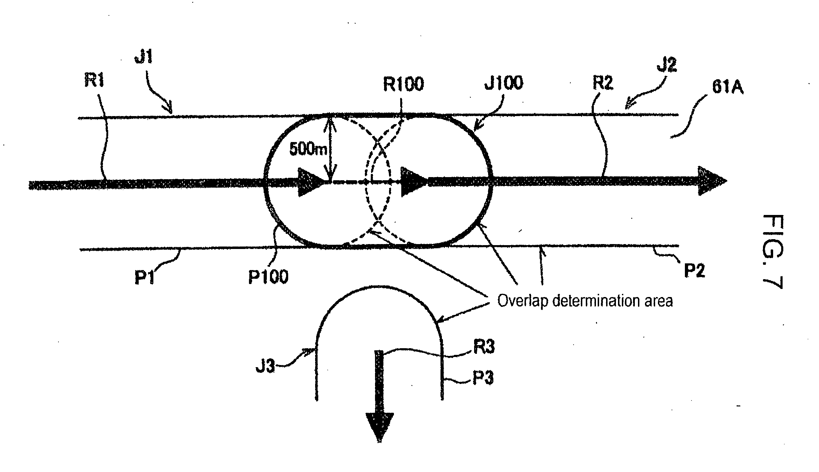

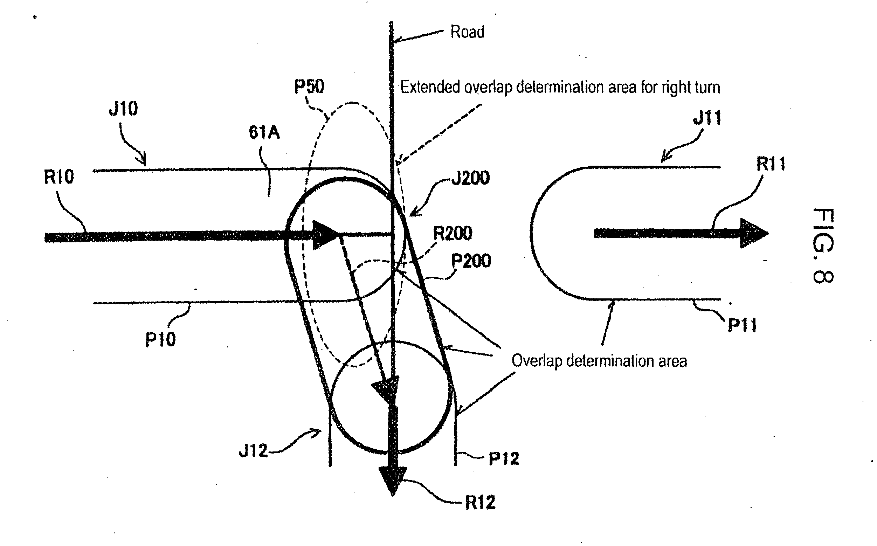

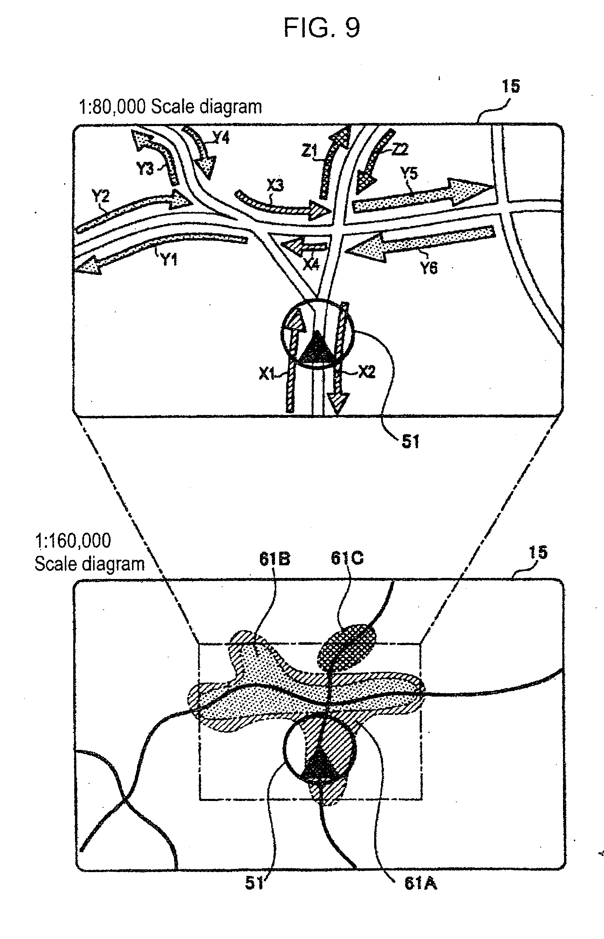

FIG. 3 is a main flowchart that shows the congestion information display processing that, according to this embodiment, the navigation system executes and that displays congestion information when the display area for map information is a wide area display at a scale that is reduced to at least a specified level. FIGS. 4 and 5 are a flowchart that shows a sub-process for area information display processing. FIG. 6 is an explanatory diagram that explains processing that proceeds directly from step S115 to step S116 in FIG. 5. FIG. 7 is an explanatory diagram that explains processing that proceeds directly from step S116 to step S117 in FIG. 5. FIG. 8 is an explanatory diagram that explains processing that proceeds directly from step S115 to step S117 in FIG. 5. FIG. 9 is a diagram that shows an example of a congestion information display and a display screen for a wide area display (1: 160,000 scale diagram) at a reduced scale of 1/160,000 that is implemented at step S 126.

Note that the program shown by the flowcharts in FIGS. 3 to 5 is stored in the RAM 42 or the ROM 43 of the navigation system 1 and is executed by the CPU 41.

As shown in FIG. 3, first, at step (hereinafter abbreviated to "S") 10, the CPU 41 executes decision processing to determine whether or not the display area for map information is a wide area display (for example, a display of an entire metropolitan area) at a scale that is reduced to at least a specified level (for example, to a scale of 1/100,000). If the display area for map information is reduced less than the specified level (for example, if it is reduced to a scale of 1/80,000) (NO at S10), the CPU 41 ends the processing.

On the other hand, if the display area for map information is reduced to at least the specified level (YES at S10), the CPU 41 proceeds to the processing at S11. At S 11, the CPU 41 determines the display area to display on the liquid crystal display 15 map information that was specified through the operation portion 14.

At S12, the CPU 41 reads, from the congestion information 23 in the traffic data base 22, the congestion information that corresponds to the display area that was determined at S11 and stores the congestion information in the RAM 42.

At S13, the CPU 41 reads from the RAM 42 the congestion information that was stored at S12. The CPU 41 sorts the congestion information by the road type in the order in which the road types will be omitted according to the scale of reduction in the display area for map information, that is, according to the widening of the display range on the liquid crystal display 15. The CPU 41 then stores the data again in the RAM 42.

For example, the data may be sorted such that congestion information pertaining to narrow streets is placed in a first tier, congestion information pertaining to prefectural roads is placed in a second tier, congestion information pertaining to national roads is placed in a third tier, congestion information pertaining to ordinary toll roads is placed in a fourth tier, congestion information pertaining to metropolitan expressways is placed in a fifth tier, and congestion information pertaining to national expressways is placed in a sixth tier, with the information then being stored again in the RAM 42.

Next, at S14, the CPU 41 sets a grouping condition for grouping the congestion information to "congested or busy". That is, the CPU 41 groups the congestion information to which a congestion level of "congested" or "busy" has been assigned, creates an equal congestion level area 61A (refer to FIG. 9) that shows a maximum area of distribution of the congestion, and decides to display it. (For example, on an ordinary road, such as a national road, a prefectural road, or the like, the congested area may be an area where the vehicle speed is in the range of zero km/h to less than 20 km/h. On a metropolitan expressway, it may be an area where the vehicle speed is in the range of zero km/h to less than 40 km/h. On a national expressway, it may be an area where the vehicle speed is in the range of zero km/h to less than 60 km/h.)

Next, at S15, the CPU 41 executes the sub-process for area information display processing (refer to FIGS. 4 and 5), which will be described later. The sub-process for area information display processing displays the equal congestion level area 61A, which shows the area where the congestion level is "congested or busy", in a specified color (orange, for example) on the liquid crystal display 15.

Next, at S16, the CPU 41 sets the grouping condition for grouping the congestion information to "congested". That is, the CPU 41 groups the congestion information to which a congestion level of "congested" has been assigned, creates an equal congestion level area 61B (refer to FIG. 9) that shows a central area of distribution of the congestion, and decides to display it. (For example, on an ordinary road, such as a national road, a prefectural road, or the like, the congested area may be an area where the vehicle speed is in the range of zero km/h to less than 10 km/h. On a metropolitan expressway, it may be an area where the vehicle speed is in the range of zero km/h to less than 20 km/h. On a national expressway, it may be an area where the vehicle speed is in the range of zero km/h to less than 40 km/h.)

Next, at S17, the CPU 41 executes the sub-process for area information display processing (refer to FIGS. 4 and 5), which will be described later. The sub-process for area information display processing displays the equal congestion level area 61B, which shows the area where the congestion level is "congested", in a specified color (red, for example) on the liquid crystal display 15. Thus, for example, the red equal congestion level area 61B is displayed superimposed on the orange equal congestion level area 61A such that the state of distribution of the "congested" and "busy" congestion levels is displayed.

Next, at S18, the CPU 41 sets the grouping condition for grouping the congestion information to "not congested". That is, the CPU 41 groups the congestion information to which a congestion level of "not congested" has been assigned, creates an equal congestion level area 61C (refer to FIG 9) that shows a central area of distribution of the congestion, and decides to display it. (For example, on an ordinary road, such as a national road, a prefectural road, or the like, the congested area may be an area where the vehicle speed is in the range of 20 km/h to less than 30 km/h. On a metropolitan expressway, it may be an area where the vehicle speed is in the range of 40 km/h to less than 50 km/h. On a national expressway, it may be an area where the vehicle speed is in the range of 60 km/h to less than 70 km/h.)

Next, at S19, the CPU 41 executes the sub-process for area information display processing (refer to FIGS. 4 and 5), which will be described later. The sub-process for area information display processing displays the equal congestion level area 61C, which shows the area where the congestion level is "not congested", in a specified color (blue, for example) on the liquid crystal display 15.

Next, at S20, the CPU 41 reads map information from the map information data base 25 for each road of the road types that will be displayed for the scale of reduction of the display area, displays the information on the liquid crystal display 15, and ends the processing.

Next, the sub-process for area information display processing that is executed at S 15, S 17, and S 19 will be explained based on FIGS. 4 and 5.

As shown in FIGS. 4 and 5, first, at S101, the CPU 41 reads from the RAM 42 the congestion information for the congestion level that was set as the grouping condition, in the order in which the congestion information was sorted at S13. The CPU 41 extracts the congestion information group for the congestion level that was set as the grouping condition and stores it in the RAM 42. (For example, at S15, the congestion level is "congested or busy". At S17, the congestion level is "congested". At S 19, the congestion level is "not congested".) Next, the CPU 41 reads from the RAM 42 individual items of congestion information that make up the extracted congestion information group. (For example, at S15, these are congestion information items for which the congestion level is "congested or busy". At S17, these are congestion information items for which the congestion level is "congested". At S19, these are congestion information items for which the congestion level is "not congested".) The CPU 41 then creates an overlap determination area for each congestion information item, the overlap determination area extending in both the transverse and longitudinal directions for a specified distance (for example, approximately 300 to 700 meters) from a link (hereinafter called a congestion link) for the congestion information item. The CPU 41 stores the overlap determination areas in the RAM 42 in association with the individual items of congestion information.

For example, as shown in FIG. 6, the CPU 41 creates a overlap determination area P1 that extends in both the transverse and longitudinal directions for approximately 500 meters from a congestion link R1, which is associated with a congestion information item J1. The congestion information item J1 makes up a portion of a congestion information group for which the congestion level that was set as the grouping condition is "congested or busy". The CPU 41 stores the overlap determination area P1 in the RAM 42 in association with the congestion information item J1. In the same manner, the CPU 41 creates a overlap determination area P2 that extends in both the transverse and longitudinal directions for approximately 500 meters from a congestion link R2, which is associated with congestion information J2. The congestion information item J2 makes up a portion of the congestion information group for which the grouping condition is "congested or busy". The CPU 41 stores the overlap determination area P2 in the RAM 42 in association with the congestion information item J2. In the same manner, the CPU 41 creates a overlap determination area P3 that extends in both the transverse and longitudinal directions for approximately 500 meters from a congestion link R3, which is associated with congestion information item J3. The congestion information item J3 makes up a portion of the congestion information group for which the grouping condition is "congested or busy". The CPU 41 stores the overlap determination area P3 in the RAM 42 in association with the congestion information item J3.

In this embodiment, each of the overlap determination areas is created such that it extends in both the transverse and longitudinal directions for a specified distance (for example, approximately 500 meters) from a congestion link, but the overlap determination areas may also be created as described below. It is thus possible to create overlap determination areas that are better matched to the traffic information.
(1) In the case of the congestion level on a basically straight road (a nearly straight road that bends less than 15 degrees to the left or right), the overlap determination areas may be created such that they extend farther in the longitudinal direction than the specified distance in the transverse direction for each congestion link (for example, approximately 500 meters in the transverse direction and approximately 800 meters in the longitudinal direction).
(2) The overlap determination areas may extend farther in the direction of connecting roads in a road network. For example, at a point where a national road No. 1 and a national road No. 2 connect, the overlap determination area may extend farther beyond the congestion link in the direction of the road.
(3) The overlap determination areas may be created such that the distances at which they extend from the congestion links in both the transverse and longitudinal directions change according to the road type (an inter-city expressway, a metropolitan expressway, an ordinary toll road, a national road, a prefectural road, or the like). For example, the overlap determination areas on an inter-city expressway may be created such that they extend 700 meters from the congestion links in both the transverse and longitudinal directions. The overlap determination areas on a national road may be created such that they extend 500 meters from the congestion links in both the transverse and longitudinal directions. The overlap determination areas on a prefectural road may be created such that they extend 300 meters from the congestion links in both the transverse and longitudinal directions.
(4) The overlap determination areas may be created such that the distances at which they extend from the congestion links in both the transverse and longitudinal directions differ according to the congestion level of the congestion information. For example, when the congestion level is "congested or busy", the extension distance may be set to 500 meters, and when the congestion level is "congested", the extension distance may be set to 800 meters.
(5) The overlap determination areas may be created such that they expand or contract according to the congestion level in an oncoming traffic lane. For example, if the congestion level in the oncoming traffic lane is "congested", the extension distance for the congestion link may be set to one-half its normal value in both the transverse and longitudinal directions.
(6) The overlap determination areas may be created such that the distances at which they extend from the congestion links in both the transverse and longitudinal directions change according to the scale of reduction in the display area for the map information. For example, when the scale of reduction is 1/100,000, the overlap determination areas may be created such that they extend 500 meters from the congestion links in both the transverse and longitudinal directions. When the scale of reduction is 1/1250,000, the overlap determination areas may be created such that they extend 1000 meters from the congestion links in both the transverse and longitudinal directions.
(7) In a case where route searching from the host vehicle position to the destination is carried out according to the Dijkstra method, and a cost is assigned to each node, the direction from the host vehicle position to the destination is assigned to each link that connects to each node. The overlap determination areas may be created such that the distances at which they extend from the congestion links in both the transverse and longitudinal directions change according to the congestion information for a congestion link lane in the direction that is assigned to the congestion link, and does not need to be created according to the congestion information for a congestion link lane in the opposite direction from the direction that is assigned to the congestion link. It is thus possible to display on the liquid crystal display 15 only the congestion information in the direction of the host vehicle's destination.

Next, at S102, first, the CPU 41 reads from the RAM 42 the first tier of the congestion information for the congestion information group that was stored at S101. The CPU 41 reads a group identification code (hereinafter called a group ID) that is stored in the congestion information and stores it in the RAM 42. Note that when the system is started, a value of "00" is stored as the group ID for each congestion information item to indicate that the group ID has not been defined.

Next, at S103, the CPU 41 reads the group ID from the RAM 42 and executes determination processing to determine whether or not the group ID is undefined, that is, whether or not the group ID is "00".

If the group ID is undefined, that is, if the group ID is "00" (YES at S103), the CPU 41 proceeds to the processing at S104. At S104, the CPU 41 assigns the group ID to the congestion information for which the group ID is undefined, then proceeds to the processing at S105. That is, the CPU 41 stores a value of "01", which indicates an association with the first group, as the group ID for the congestion information. Note that the CPU 41 sequentially stores in the RAM 42 the type of group ID it assigns to each congestion information item.

On the other hand, if the group ID is already defined, that is, if the group ID is not "00" (NO at S103), the CPU 41 proceeds to the processing at S105.

Next, at S105, the CPU 41 reads from the RAM 42 the overlap determination area that corresponds to the congestion information that it read at S102. The CPU 41 then searches for overlap determination areas that overlap this overlap determination area.

For example, as shown in FIG. 6, the CPU 41 searches for and finds the overlap determination area P2, which overlaps the overlap determination area P1 that corresponds to the congestion information item J1.

At S106, the CPU 41 stores a value of "01", the group ID for the first group, as the group ID for the congestion information that corresponds to the overlap determination areas that were found at S105.

For example, as shown in FIG. 6, the CPU 41 stores a value of "01", which indicates an association with the first group, as the group ID for the congestion information item J2, which corresponds to the overlap determination area P2.

Note that filtering may be done according to the actual length of the congested section, the congestion level (ranked as not congested, busy, congested, or the like), or the travel time, all found in the congestion information. Where the actual length of the congested section is less than 100 meters, for example, the value of "01" may not be stored as the group ID. That is, the data may be excluded from grouping. This makes it possible to delete congestion information that is due to sensor measurement errors or the like.

Next, at S107, the CPU 41 executes determination processing to determine whether or not, in the congestion information group that was stored at S101, there is congestion information for which the group ID is undefined, that is, congestion information for which a group ID of "00" is stored, and whether or not the congestion information is for an overlap determination area that overlaps the overlap determination areas that correspond to the congestion information for which group IDs were stored at S 104 and S106.

For example, the CPU 41 determines whether or not a group ID of "00" is stored for the congestion information and whether or not the congestion information is for an overlap determination area that overlaps the overlap determination areas P1 and P2 shown in FIG. 6, for the respective congestion information of which, J1 and J2, the group ID "01" of the first group was stored.

If congestion information exists in the congestion information group that was stored at S101 for which the group ID is undefined, that is, for which a group ID of "00" is stored, and the congestion information corresponds to a next overlap determination area that overlaps the overlap determination areas that correspond to the congestion information for which group IDs were stored at S 104 and S106 (YES at S107), the processing proceeds to S108. At S108, the CPU 41 reads from the RAM 42 the congestion information for the next overlap determination area and executes once more the processing from S106 onward. In this manner, the same group ID is stored for the congestion information for each of a series of overlap determination areas that sequentially overlap the overlap determination area that corresponds to the congestion information for which the group ID was stored at S104.

For example, a group ID of "01", which indicates an association with the first group, is stored for the congestion information item for an overlap determination area that overlaps the overlap determination areas P1 and P2 shown in FIG 6, for the respective congestion information items of which, J1 and J2, the group ID "01" of the first group was stored.

On the other hand, if congestion information exists in the congestion information group that was stored at S101 for which the group ID is undefined, that is, for which a group ID of "00" is stored, but it is congestion information that does not correspond to the next overlap determination area that overlaps the overlap determination areas that correspond to the congestion information for which group IDs were stored at S104 and S106 (NO at S107), the CPU 41 proceeds to the processing at S109.

At S109, the CPU 41 executes determination processing to determine whether or not, in the congestion information group that was stored at S101, there is congestion information for which the group ID is undefined, that is, congestion information for which a group ID of "00" is stored.

If congestion information exists in the congestion information group that was stored at S101 for which the group ID is undefined, that is, for which a group ID of "00" is stored, (YES at S109), the processing proceeds to S110. At S110, the CPU 41 reads congestion information from the first tier for which the group ID of the congestion information group is undefined. The CPU 41 stores the congestion information in the RAM 42, then returns to the processing at S102. At S102, the CPU 41 reads the stored congestion information, reads the group ID that is stored for the congestion information, then stores the group ID in the RAM 42.

Next, the CPU 41 once more executes the processing from S103 onward. Note that at S104, the CPU 41 adds 1 to the group ID that was assigned in the preceding cycle and stores that value as the group ID for the congestion information.

On the other hand, if congestion information for which the group ID is undefined, that is, for which a group ID of "00" is stored, does not exist in the congestion information group that was stored at S101 (NO at S109), the CPU 41 proceeds to the processing at S111. Thus, the CPU 41 executes processing that sequentially creates an equal congestion level area 61A (refer to FIG. 9) for each group.

At S111, the CPU 41 defines the first group. That is, the CPU 41 stores "01", the group ID that is stored for the congestion information that is subject to processing, as a processing group ID in the RAM 42.

Next, at S 112, the CPU 41 reads the processing group ID from the RAM. The CPU 41 then reads, from among the congestion information in the congestion information group that was stored at S101, the first congestion information item for which the processing group ID is stored as the group ID.

Next, at S113, the CPU 41 reads the congestion link for each congestion information item that corresponds to an overlap determination area that overlaps the overlap determination area for the congestion information item that was read at S 112. The CPU 41 then stores the links as overlap congestion links in the RAM 42.

For example, as shown in FIG. 6, the CPU 41 reads the congestion links R1, R2, and the like from the congestion information items J1, J2, and the like for the overlapping overlap determination areas P1, P2, and the like. The CPU 41 then stores the congestion links R1, R2, and the like as overlap congestion links in the RAM 42.

Next, at S 114, the CPU 41 reads the first overlap congestion link that was stored among the overlap congestion links in the RAM 42.

Next, at S115, the CPU 41 executes determination processing to determine whether or not the overlap congestion link that was read is connected to the next overlap congestion link in a road network, the overlap congestion links being stored sequentially in the RAM 42.

If the overlap congestion link that was read is not connected to the next overlap congestion link in the road network, stored sequentially in the RAM 42 (NO at S115), the CPU 41 proceeds to the processing at S 118.

On the other hand, if the overlap congestion link that was read is connected to the next overlap congestion link in the road network, stored sequentially in the RAM 42 (YES at S115), the CPU 41 proceeds to the processing at S116. At S116, the CPU 41 executes determination processing to determine whether each congestion information item that corresponds to each overlap congestion link that is connected in the road network is unconnected or not, that is, whether the congestion link for each congestion information item is unconnected or not.

If an individual congestion information item that corresponds to an individual overlap congestion link that is connected in the road network is connected, that is, if the congestion link for the congestion information item is connected (NO at S 116), the CPU 41 proceeds to the processing at S118.

On the other hand, if an individual congestion information item that corresponds to an individual overlap congestion link that is connected in the road network is unconnected, that is, if the congestion link for the congestion information item is unconnected (YES at S116), the CPU 41 proceeds to the processing at S 117. At S 117, the CPU 41 creates a virtual congestion information item that has a virtual congestion link that connects the overlap congestion link for the unconnected congestion information item. The virtual congestion information item is then stored in the RAM 42. The CPU 41 also creates a joining overlap determination area, which extends in both the transverse and longitudinal directions for a specified distance (for example, approximately 300 to 700 meters) from the virtual congestion link. The joining overlap determination area is then stored in the RAM 42. For the group ID of the virtual congestion information item, the CPU 41 stores in the RAM 42 the group ID of the individual congestion information item that is connected to the joining overlap determination area. The CPU 41 then proceeds to the processing at S118.

In this embodiment, although the congestion link for each congestion information item is connected in the road network and the congestion information items have been determined to be in the same group, if the congestion links for the congestion information items are not connected continuously, when the individual overlap determination areas are connected in their existing states and the equal congestion level areas 61A, 61B, and 61C, described later, are created and displayed for a basically straight road (a nearly straight road that bends less than 15 degrees to the left or right), dips (indentations) will occur in the contours of the congestion information. Also, if the congestion links for the congestion information items are not connected continuously, when the individual overlap determination areas are connected in their existing states and the equal congestion level areas 61A, 61B, and 61C, described later, are created and displayed for a road that curves left or right, distortions will occur in the contours of the congestion information.

However, at S116 and S 117, the virtual congestion information item having the virtual congestion link is created and stored in the RAM 42. Also, the joining overlap determination area, which extends in both the transverse and longitudinal directions for a specified distance (for example, approximately 300 to 700 meters) from the virtual congestion link, is created and stored in the RAM 42 in association with the virtual congestion information item. Thus, when the individual overlap determination areas are smoothly joined via the joining overlap determination area and the equal congestion level areas 61A, 61B, and 61C, described later, are created and displayed (refer to FIG. 9), the occurrence of dips (indentations) and distortions can be prevented.

For example, as shown in FIG. 7, the overlap congestion links R1 and R2 for the congestion information items J1 and J2, which respectively correspond to the overlap determination areas P1 and P2, are not connected, but if they are connected on a basically straight road in the road network, a virtual congestion information item J100, which has a virtual congestion link R100 that joins the overlap congestion links R1 and R2, is created and stored in the RAM 42. Also, a joining overlap determination area P100, which extends for 500 meters in both the transverse and longitudinal directions from the virtual congestion link R100, is created and stored in the RAM 42 in association with the virtual congestion information item J100.

In other words, because the overlap congestion links R1 and R2 for the congestion information items J1 and J2, which respectively correspond to the overlap determination areas P1 and P2, are not connected, dips (indentations) occur when the overlap determination areas P1 and P2 are connected. However, the creation of the virtual congestion information item J100, which has the virtual congestion link R100 that joins the overlap congestion links R1 and R2, and the creation of the joining overlap determination area P100, which extends for 500 meters in both the transverse and longitudinal directions from the virtual congestion link R100, make it possible to join the overlap determination areas P1 and P2 smoothly via the joining overlap determination area P 100.

Also, as shown in FIG 8, for example, overlap congestion links R10 and R12 for congestion information items J10 and J12, which respectively correspond to overlap determination areas P10 and P12, are not connected, but if they are connected on a road that curves to the right in the road network, a virtual congestion information item J200, which has a virtual congestion link R200 that joins the overlap congestion links R10 and R12, is created and stored in the RAM 42. Also, a joining overlap determination area P200, which extends for 500 meters in both the transverse and longitudinal directions from the virtual congestion link R200, is created and stored in the RAM 42 in association with the virtual congestion information item J200.

In other words, because the overlap congestion links R10 and R12 for the congestion information items J10 and J1 2, which respectively correspond to the overlap determination areas P10 and P12, are not connected, but are actually connected on a road that curves to the right in the road network, the CPU 41 creates an extended overlap determination area P50, which is elliptical and centered on the forward end of the congestion link R10, and then determines whether or not the extended overlap determination area P50 overlaps the overlap determination area P12. The extended overlap determination area P50 does overlap the overlap determination area P12, so if the overlap determination areas P1 and P2 are connected in their existing state by the extended overlap determination area P50, a distortion occurs in which the corner portion protrudes on the outer side. Therefore, the CPU 41 creates the virtual congestion information item J200, which has a virtual congestion link R200 that joins the overlap congestion links R10 and R12, and also creates the joining overlap determination area P200, which extends for 500 meters in both the transverse and longitudinal directions from the virtual congestion link R200. The CPU 41 then joins the overlap determination areas P10 and P12 smoothly via the joining overlap determination area P200.

Next, at S118, the CPU 41 executes determination processing to determine whether or not a next overlap congestion link exists, that is, whether or not a next continuously overlapping overlap determination area exists.

If a next overlap congestion link exists, that is, a next continuously overlapping overlap determination area exists (YES at S118), the CPU 41 proceeds to the processing at S 119. At S119, the CPU 41 reads the overlap congestion link for the continuously overlapping overlap determination area, then executes once more the processing from S115 onward. In this manner, each virtual congestion information item, and the joining overlap determination area that corresponds to each virtual congestion link and each virtual congestion information item, are created in order to connect, smoothly and in sequence, each overlap determination area that overlaps the overlap determination area that corresponds to the first overlap congestion link that was set at S114.

On the other hand, if a next overlap congestion link does not exist, that is, a next continuously overlapping overlap determination area does not exist (NO at S118), the CPU 41 proceeds to the processing at S120. At S120, the CPU 41 once more reads the processing group ID from the RAM, then executes determination processing to determine whether or not, among the congestion information for which the processing group ID is stored as the group ID, a congestion information item exists that has not been processed at S113 to S119.

If, among the congestion information for which the processing group ID is stored, a congestion information item exists that has not been processed at S113 to S119 (YES at S120), the CPU 41 proceeds to the processing at S121. At S121, the CPU 41 reads, from among the congestion information for which the processing group ID is stored, the earliest congestion information item that has not been processed at S113 to S 119, then once more executes the processing from S113 onward. In this manner, each virtual congestion information item, and the joining overlap determination area that corresponds to each virtual congestion link and each virtual congestion information item, are created in order to smoothly connect each overlap determination area that corresponds to the overlap congestion link for each congestion information item for which the same group ID is stored.

On the other hand, if, among the congestion information for which the processing group ID is stored, a congestion information item that has not been processed at S113 to S119 does not exist (NO at S120), the CPU 41 proceeds to the processing at S122. At S 122, the CPU 41 reads the processing group ID again, then reads from the RAM 42 the congestion information for which the processing group ID is stored, as well as each overlap determination area and each joining overlap determination area that correspond to the virtual congestion information item. The CPU 41 then joins each overlap determination area and each joining overlap determination area to create an equal congestion level area, which is ten stored in the RAM 42. In this manner, an equal congestion level area is created that corresponds to the congestion information for which the processing group ID is stored.

Note that when each overlap determination area and each joining overlap determination area are joined to create the equal congestion level area, the angles that are formed in the edge portion of the equal congestion level area may be smoothed using B-spline curves, Bezier curves, or the like.

For example, as shown in FIG. 7, the equal congestion level area 61A is created by joining the overlap determination areas P1 and P2, which correspond to the congestion information items J1 and J2, for which the congestion level is "congested" or "busy", with the joining overlap determination area P100, which corresponds to the virtual congestion information item J 100.

Also, as shown in FIG. 8, the equal congestion level area 61A is created by joining the overlap determination areas P10 and P12, which correspond to the congestion information items J10 and J12, for which the congestion level is "congested" or "busy", with the joining overlap determination area P200, which corresponds to the virtual congestion information item J200. Note that each internal angle portion of the equal congestion level area 61A, which joins the overlap determination areas P10 and P12 with the joining overlap determination area P200, may be smoothed using B-spline curves, Bezier curves, or the like.

Next, at S123, the CPU 41 determines a display color that corresponds to the congestion level that was set as the grouping condition. The display color serves as the display color for displaying the created equal congestion level area on the liquid crystal display 15, and the CPU 41 stores it in the RAM 42.

For example, at S15, where the congestion level that was set as the grouping condition is "congested or busy", the CPU 41 determines that orange is the display color for displaying the created equal congestion level area on the liquid crystal display 15 and stores it in the RAM 42. Also, at S17, where the congestion level that was set as the grouping condition is "congested", the CPU 41 determines that red is the display color for displaying the equal congestion level area on the liquid crystal display 15 and stores it in the RAM 42. And at S19, where the congestion level that was set as the grouping condition is "not congested", the CPU 41 determines that blue is the display color for displaying the equal congestion level area on the liquid crystal display 15 and stores it in the RAM 42.

Next, at S124, the CPU 41 reads the processing group ID from the RAM 42, then executes determination processing to determine whether or not, among the congestion information in the congestion information group that was stored at S101, congestion information exists for which the group ID equals 1 plus the processing group ID, that is, whether or not unprocessed congestion information exists in the next group.

Ifunprocessed congestion information exists in the next group (YES at S124), the CPU 41 proceeds to the processing at S125. At S125, the CPU 41 reads the processing group ID, adds 1 to it, stores the result once more as the processing group ID, then executes the processing from S112 onward. For example, if the processing group ID in the RAM 42 is "01", the CPU 41 adds 1 to it, stores "02" as the processing group ID in the RAM 42, then executes the processing from S112 onward.

In this manner, equal congestion level areas are created in sequence for each group ID among the remaining congestion information, and the display color for each created equal congestion level area is determined such that it corresponds to the congestion level that was set as the grouping condition.

On the other hand, if unprocessed congestion information does not exist in the next group (NO at S124), the CPU 41 proceeds to the processing at S126. At S 126, the CPU 41 reads from the RAM 42 each equal congestion level area and the display color for each equal congestion level area, displays them on the liquid crystal display 15, then ends the sub-process and returns to the main flowchart.

Here, an example of a display screen for congestion information in a wide area display (1:160,000 scale diagram) at a reduced scale of 1/160,000 will be explained based on FIG. 9.

As shown in the upper part of FIG. 9, in a map image (1:80,000 scale diagram) at a reduced scale of 1/80,000 on the liquid crystal display 15, each road is displayed by the road type (a national expressway, a metropolitan expressway, an ordinary toll road, a national road, a prefectural road, or a narrow street), which is displayed in the 1:80,000 scale diagram, and a vehicle position mark 51 that shows the host vehicle position is displayed lower middle portion of the screen. Also, to the left and right of and above the vehicle position mark 51, orange arrows X1 to X4 are displayed along various roads to indicate that the congestion level is "busy". (For example, on ordinary roads such as a national road, a prefectural road, or the like, sections where the vehicle speed is zero to 20 km/h; on a metropolitan expressway, a section where the vehicle speed is zero to 40 km/h; and on a national expressway, a section where the vehicle speed is zero to 60 km/h.) Also, to the left and right of the orange arrows X3 and X4, red arrows Y1 to Y6 are displayed along various roads to indicate that the congestion level is "congested". (For example, on ordinary roads such as a national road, a prefectural road, or the like, sections where the vehicle speed is zero to 10 km/h; on a metropolitan expressway, a section where the vehicle speed is zero to 20 km/h; and on a national expressway, a section where the vehicle speed is zero to 40 km/h.) Also, above the orange arrows X3 and X4, blue arrows Z1 to Z2 are displayed along various roads to indicate that the congestion level is "not congested". (For example, on ordinary roads such as a national road, a prefectural road, or the like, sections where the vehicle speed is 20 to 30 km/h; on a metropolitan expressway, a section where the vehicle speed is 40 to 50 km/h; and on a national expressway, a section where the vehicle speed is 60 to 70 km/h.) Note that as the vehicle speed in a congested section decreases, the width of the corresponding arrow X1 to X4, Y1 to Y6, or Z1 to Z2 increases.

Also, as shown in the lower part of FIG. 9, when the user operates the operation portion 14 to change the 1:80,000 scale diagram to a wide area display (1:160,000 scale diagram) with a reduction scale of 1/160,000, the 1:80,000 scale diagram is displayed in scaled-down form in a central portion of the liquid crystal display 15. Also, instead of the arrows X1 to X4, Y1 to Y6, and Z1 to Z2, first, the orange equal congestion level area 61A, which was created by connecting individual overlap determination areas and individual joining overlap determination areas that respectively correspond to individual congestion information items and individual virtual congestion information items in which the congestion level is "congested" or "busy", that is, the orange equal congestion level area 61A, in which the congestion level is "congested or busy", is displayed in a form that follows the individual roads. Next, the red equal congestion level area 61B, which was created by connecting individual overlap determination areas and individual joining overlap determination areas that respectively correspond to individual congestion information items and individual virtual congestion information items in which the congestion level is "congested", that is, the red equal congestion level area 61B, in which the congestion level is "congested", is displayed, superimposed on the equal congestion level area 61A in a form that follows the individual roads. Next, the blue equal congestion level area 61C, which was created by connecting individual overlap determination areas and individual joining overlap determination areas that respectively correspond to individual congestion information items and individual virtual congestion information items in which the congestion level is "not congested", that is, the blue equal congestion level area 61C, in which the congestion level is "not congested", is displayed in a form that follows the individual roads. Next, the individual roads are displayed in the 1:160,000 scale diagram by the road type (a national expressway, a metropolitan expressway, an ordinary toll road, a national road, a prefectural road, or a narrow street), superimposed on the equal congestion level areas 61A. 61B, and 61C, and the vehicle position mark 51 is displayed in the central portion of the screen.

As explained in detail above, in the navigation system 1 according to this embodiment, when the display area for the map information is reduced in scale to at least a specified level (for example, to a scale of 1/100,000) for a wide area display (for example, a display of an entire metropolitan area), first, the CPU 41 extracts, from the congestion information that corresponds to the map information display area that will be displayed on the liquid crystal display 15, the congestion information for which the congestion level is "congested or busy". The CPU 41 then creates an overlap determination area that extends in both the transverse and longitudinal directions for a specified distance from the congestion link for each extracted congestion information item (S101). Also, the CPU 41 groups the congestion information items whose overlap determination areas overlap and creates for each group an equal congestion level area by joining the overlap determination areas. The equal congestion level area is displayed on the liquid crystal display 15 in a display color (for example, orange) that corresponds to the congestion level of "congested or busy" (S14 to S15). Next, the CPU 41 extracts, from the congestion information that corresponds to the map information display area that will be displayed on the liquid crystal display 15, the congestion information for which the congestion level is "congested", then creates an overlap determination area that extends in both the transverse and longitudinal directions for a specified distance from the congestion link for each extracted congestion information item (S101). Next, the CPU 41 groups the congestion information items whose overlap determination areas overlap and creates for each group an equal congestion level area by joining the overlap determination areas. The equal congestion level area is displayed on the liquid crystal display 15 in a display color (for example, red) that corresponds to the congestion level of "congested" (S16 to S17). Next, the CPU 41 extracts, from the congestion information that corresponds to the map information display area that will be displayed on the liquid crystal display 15, the congestion information for which the congestion level is "not congested", then creates an overlap determination area that extends in both the transverse and longitudinal directions for a specified distance from the congestion link for each extracted congestion information item (S101). Next, the CPU 41 groups the congestion information items whose overlap determination areas overlap and creates for each group an equal congestion level area by joining the overlap determination areas. The equal congestion level area is displayed on the liquid crystal display 15 in a display color (for example, blue) that corresponds to the congestion level of "not congested" (S18 to S 19). Finally, the CPU 41 reads, from the map information data base 25, the map information for the roads of the road types that will be displayed according to the scale of reduction of the display area, then displays the map information on the liquid crystal display 15 (S20).

Because the equal congestion level areas are constructed by joining the overlap determination areas in each group, which are created based on the individual congestion links contained in the individual congestion information items and which extend in both the transverse and longitudinal directions from their respective congestion links, when the display area for the map information is reduced in scale to at least a specified level for a wide area display, the equal congestion level areas are formed such that they follow the displayed roads. It is therefore possible for the user to instantaneously recognize which roads in which areas are busy or congested and to easily determine, based on the map information, where a detour is that will bypass the congestion. Also, even when the display area for the map information is reduced in scale to at least a specified level for a wide area display, such that the display omits some roads, the equal congestion level areas are formed by joining the overlap determination areas in each group, which correspond even to congestion links for congestion information items in road positions that are omitted from the display, so it is possible to display in detail the congestion information items in the road positions that are omitted from the display, and to display them in a form that follows the roads that are omitted from the display. It is therefore possible for the user to judge more accurately which roads in which areas are busy or congested.

Also, because each of the equal congestion level areas for the congestion levels of "congested or busy", "congested", and "not congested" is displayed in superimposed form and in a different color, it is possible to display in detail the congestion information items in road positions that are omitted from the display, even when the display area for the map information is reduced in scale to at least a specified level for a wide area display. The state of distribution of congestion levels can also be displayed. It is therefore possible for the user to recognize each displayed equal congestion level area instantaneously and to judge more accurately which roads in which areas are busy or congested, so the user can easily determine, based on the map information, where a detour is that will bypass the congestion.

Also, where the individual overlap congestion links contained in congestion information items where overlap determination areas do not overlap are connected in a road network, a virtual congestion information item is established that has a virtual link that connects the overlap congestion links. Based on the virtual link, a joining overlap determination area that extends in both the transverse and longitudinal directions for a specified distance from the virtual link is created between the non-overlapping links. Creating an equal congestion level area by joining the overlap determination areas and the joining overlap determination area makes it possible to display a congestion level area without any dips, distortions, or the like.

Note that the scope of the present invention is not limited by the example above, and various improvements and modifications are possible within the scope of the claims for the present invention. For example, the improvements and modifications described below may be made.
(A) In the example above, each of the equal congestion level areas for the congestion levels of "congested or busy", "congested", and "not congested" is respectively displayed in a single color (for example, orange, red, or blue), but the equal congestion level areas may also be displayed three-dimensionally such that the height of any one equal congestion level area increases as the congestion level in the equal congestion level area increases.
(B) In the example above, each of the equal congestion level areas for the congestion levels of "congested or busy", "congested", and "not congested" is respectively displayed in a single color (for example, orange, red, or blue), but the boundary portions of each equal congestion level area may also be blurred by displaying them in gradation.
(C) In the example above, the display color of each equal congestion level area is determined based on the separate congestion levels of "congested or busy", "congested", and "not congested", but the travel time may also be included in the determination of the display color.
(D) In the example above, after all the equal congestion level areas are displayed, the map information for each road is read from the map information data base 25 and displayed on the liquid crystal display 15, but the display order may be rearranged according to the road type. For example, prefectural road map information may be read first from the map information data base 25 and displayed on the liquid crystal display 15, after which the equal congestion level areas are displayed, after which metropolitan expressway map information is read first from the map information data base 25 and displayed on the liquid crystal display 15.
(E) In the example above, the CPU 41 groups the congestion information according to the congestion levels of "congested or busy" and "congested", creates an equal congestion level area for each group, then displays the equal congestion level areas in superimposed form, each equal congestion level area having a single display color that corresponds to its respective congestion level. (For example, the display color for the "congested or busy" equal congestion level area is set to orange, and the display color for the "congested" equal congestion level area is set to red.) And the state of distribution of the congestion levels of "congested" and "busy" is displayed (S14 to S17). But the procedure described below may also be used, for example.

The CPU 41 groups the congestion information only for the congestion level of "congested or busy", creates an equal congestion level area for each group, then determines the display color to match the state of congestion in each equal congestion level area. Next, each equal congestion level area is displayed on the liquid crystal display 15. That is, the CPU 41 executes the processing from S101 to S126 above. However, instead of the processing at S 123, the CPU 41 executes display color determination processing as described below.

First, the CPU 41 computes a total congested length, which is the sum of individual congested lengths for all of the congestion information items having a congestion level of "congested" within the equal congestion level area that is created at S122. Also, the CPU 41 computes a total busy length, which is the sum of individual congestion lengths for all of the congestion information items having a congestion level of "busy" within the same equal congestion level area. Next, the CPU 41 multiplies the total congested length by a congested coefficient that is stored in advance in the ROM 43 (for example, 4 or the like) and multiplies the total busy length by a busy coefficient that is stored in advance in the ROM 43 (for example, 2 or the like). The CPU 41 then adds the two results to compute a total road busy length. The CPU 41 then divides the total road busy length by the total congested length. If the result is greater than or equal to a threshold value (for example, 3 or the like) that is stored in advance in the ROM 43, the CPU 41 determines that the display color for the equal congestion level area that was created at S122 is a first color (for example, red) that is stored in advance in the ROM 43, and the CPU 41 stores the display color in the RAM 42. Also, if the result when the CPU 41 divides the total road busy length by the total congested length is less than the threshold value (for example, 3 or the like) that is stored in advance in the ROM 43, the CPU 41 determines that the display color for the equal congestion level area that was created at S122 is a second color (for example, orange) that is stored in advance in the ROM 43, and the CPU 41 stores the display color in the RAM 42.

In this manner, when the CPU 41 groups the congestion information only for the congestion level of "congested or busy" , creates an equal congestion level area for each group, determines the display color to indicate the state of congestion in each equal congestion level area, and executes the processing at S126, it becomes possible to display the state of distribution of the congestion levels of "congested" and "busy" simultaneously on the liquid crystal display 15.

## Claims

1. A navigation system (1), comprising:
a receiving portion (17) that is adapted to receive traffic information (22) that includes congestion information (23);
a congestion information acquisition portion (13) that is adapted to obtain based on the traffic information, congestion information related to a display area for map information;
a congestion information extraction portion (13) that extract, from the congestion information obtained by the congestion information acquisition portion (13), a congestion information with a specified congestion level;
an overlap determination area creation portion (13) that is adapted to create an overlap determination area (P1, P2, P3; P10, P11, P12) a extends in both transverse and longitudinal directions for a specified distance from a road link contained in each congestion information item (J1, J2, J3; J10, J11, J12) in the extracted congestion information;
a grouping portion (13) that is adapted to group the congestion information items whose overlap determination areas overlap and/or which have the same congestion level;
an equal congestion level area creation portion (13) that is adapted to create an equal congestion level area (61A/61B/61C) by connecting the overlap determination areas that correspond to each congestion information item that was grouped by the grouping portion (13); and
a display control portion (13) that is adapted to execute control such that the equal congestion level area is identifiably displayed superimposed on the display area for the map information.

2. The navigation system according to claim 1, wherein
the congestion information extraction portion (13) is adapted to extract the congestion information groups for a plurality of respective types of the congestion levels in order;
the equal congestion level area creation portion (13) is adapted to create a plurality of types of the equal congestion level areas that respectively correspond to the congestion information groups extracted by the congestion information extraction portion (13); and
the display control portion (13) is adapted to display the plurality of types of the equal congestion level areas superimposed on the display area for the map information such that the equal congestion level areas can be distinguished from one another.

3. The navigation system according to claim 2, wherein the display control portion (13) is adapted to display mutually differentiated display colors for the plurality of types of the equal congestion level areas (61A, 61B, 61C) superimposed on the display area for the map information.

4. The navigation system according to any one of claims 1 to 3, wherein
the equal congestion level area creation portion (13) comprises
a virtual link creation portion (13) that is adapted to create, where the road links contained in congestion information items for which the overlap determination areas do not overlap are directly connected in a road network, a virtual link that joins the road links; and
a joining overlap determination area creation portion (13) that is adapted to create, based on the virtual link, a joining overlap determination area (P100, P200) that extends in both the transverse and longitudinal directions for a specified distance from the virtual link, wherein
the equal congestion level area creation portion (13) is adapted to create an equal congestion level area by joining the joining overlap determination area with the overlap determination areas that overlap the joining overlap determination area.

5. The navigation system according to any one of claims 1 to 4, wherein the display control portion (13) is adapted to execute control such that, when the display area for the map information is reduced in scale to at least a specified level for a wide area display, the equal congestion level area is displayed superimposed on the display area for the map information.

## Patentansprüche

1. Navigationssystem (1) mit:
einem Empfangsabschnitt (17), der dazu geeignet ist, Verkehrsinformation (22) zu empfangen, die Stauinformation (23) enthält;
einem Stauinformationserfassungsabschnitt (13), der dazu geeignet ist, basierend auf der Verkehrsinformation Stauinformation zu erhalten, die mit einem Darstellungsbereich für Karteninformation in Beziehung steht;
einem Stauinformationsextraktionsabschnitt (13), der dazu geeignet ist, von der durch den Stauinformationserfassungsabschnitt (13) erhaltenen Stauinformation Stauinformation mit einem vorgegebenen Staugrad zu extrahieren ;
einem Überlappungsbestimmungsbereicherzeugungsabschnitt (13), der dazu geeignet ist, einen Überlappungsbestimmungsbereich (P1, P2, P3; P10, P11, P12) zu erzeugen, der sich sowohl in der Quer- als auch in der Längsrichtung über einen vorgegebenen Abstand von einem Straßenstreckenabschnitt erstreckt, der in jedem Stauinformationselement (J1, J2, J3; J10, J11, J12) der extrahierten Stauinformation enthalten ist;
einem Gruppierungsabschnitt (13), der dazu geeignet ist, die Stauinformationselemente zu gruppieren, deren Überlappungsbestimmungsbereiche sich überlappen und/oder die den gleichen Staugrad haben;
einem Abschnitt (13) zum Erzeugen eines Bereichs mit gleichem Staugrad, der dazu geeignet ist, einen Bereich (61A, 61B, 61C) mit gleichem Staugrad durch Verbinden der Überlappungsbestimmungsbereiche zu erzeugen, die den jeweiligen Stauinformationselementen entsprechen, die durch den Gruppierungsabschnitt (13) gruppiert wurden; und
einem Darstellungssteuerungsabschnitt (13), der dazu geeignet ist, eine Steuerung derart auszuführen, dass der Bereich mit gleichem Staugrad überlagert auf dem Darstellungsbereich für die Karteninformation erkennbar dargestellt wird.

2. Navigationssystem nach Anspruch 1, wobei
der Stauinformationsextraktionsabschnitt (13) dazu geeignet ist, die Stauinformationsgruppen für mehrere jeweilige Typen der Staugrade in einer Folge zu extrahieren;
der Abschnitt (13) zum Erzeugen eines Bereichs mit gleichem Staugrad dazu geeignet ist, mehrere Typen von Bereichen mit gleichem Staugrad zu erzeugen, die jeweils den durch den Stauinformationsextraktionsabschnitt (13) extrahierten Stauinformationsgruppen entsprechen; und
der Darstellungssteuerungsabschnitt (13) dazu geeignet ist, die mehreren Typen der Bereiche mit gleichem Staugrad auf dem Darstellungsbereich für die Karteninformation überlagert derart darzustellen, dass die Bereiche mit gleichem Staugrad voneinander unterscheidbar sind.

3. Navigationssystem nach Anspruch 2, wobei der Darstellungssteuerungsabschnitt (13) dazu geeignet ist, wechselseitig verschiedene Darstellungsfarben für die mehreren Typen der Bereiche mit gleichem Staugrad (61A, 61B, 61C) darzustellen, die auf dem Darstellungsbereich für die Karteninformation überlagert dargestellt sind.

4. Navigationssystem nach einem der Ansprüche 1 bis 3, wobei
der Abschnitt (13) zum Erzeugen eines Bereichs mit gleichem Staugrad aufweist:
einen Abschnitt (13) zum Erzeugen eines virtuellen Streckenabschnitts, der dazu geeignet ist, wenn die Straßenstreckenabschnitte, die in den Verkehrsinformationselementen enthalten sind, für die die Überlappungsbestimmungsbereiche sich nicht überlappen, direkt in einem Straßennetz verbunden sind, einen virtuellen Streckenabschnitt zu erzeugen, der die Straßenstreckenabschnitte verbindet; und
einen Abschnitt (13) zum Erzeugen eines verbindenden Überlappungsbestimmungsbereichs, der dazu geeignet ist, basierend auf dem virtuellen Streckenabschnitt einen verbindenden Überlappungsbestimmungsbereich (P100, P200) zu erzeugen, der sich sowohl in der Quer- als auch in der Längsrichtung über einen vorgegebenen Abstand vom virtuellen Streckenabschnitt erstreckt,
wobei der Abschnitt (13) zum Erzeugen eines Bereichs mit gleichem Staugrad dazu geeignet ist, einen Bereich mit gleichem Staugrad durch Verbinden des verbindenden Überlappungsbestimmungsbereichs mit den Überlappungsbestimmungsbereichen zu erzeugen, die den verbindenden Überlappungsbestimmungsbereich überlappen.

5. Navigationssystem nach einem der Ansprüche 1 bis 4, wobei der Darstellungssteuerungsabschnitt (13) dazu geeignet ist, eine Steuerung derart auszuführen, dass, wenn der Darstellungsbereich für die Karteninformation auf mindestens einen vorgegebenen Maßstab für eine Weitbereichdarstellung verkleinert ist, der Bereich mit gleichem Staugrad auf dem Darstellungsbereich für die Karteninformation überlagert dargestellt wird.

## Revendications

1. Système de navigation (1), comprenant :
une partie de réception (17) qui est adaptée pour recevoir des informations de trafic (22) qui comprennent des informations de congestion (23) ;
une partie d'acquisition d'informations de congestion (13) qui est adaptée pour obtenir, sur la base des informations de trafic, des informations de congestion liées à une zone d'affichage pour des informations cartographiques ;
une partie d'extraction d'informations de congestion (13) qui est adaptée pour extraire, des informations de congestion obtenues par la partie d'acquisition d'informations de congestion (13), une information de congestion avec un niveau de congestion spécifié ;
une partie de création de zone de détermination de chevauchement (13) qui est adaptée pour créer une zone de détermination de chevauchement (P1, P2, P3 ; P10, P11, P12) qui s'étend à la fois dans les directions transversale et longitudinale pour une distance spécifiée à partir d'une liaison routière contenue dans chaque élément d'information de congestion (J1 J2, J3 ; J10, J11, J12) dans les informations de congestion extraites ;
une partie de regroupement (13) qui est adaptée pour regrouper les éléments d'information de congestion dont les zones de détermination de chevauchement se chevauchent et/ou qui ont le même niveau de congestion ;
une partie de création de zone de niveau de congestion égal (13) qui est adaptée pour créer une zone de niveau de congestion égal (61A, 61B, 61C) en reliant les zones de détermination de chevauchement qui correspondent à chaque élément d'information de congestion qui a été regroupé par la partie de regroupement (13) ; et
une partie de commande d'affichage (13) qui est adaptée pour exécuter une commande de sorte que la zone de niveau de congestion égal soit affichée de façon identifiable superposée sur la zone d'affichage pour les informations cartographiques.

2. Système de navigation selon la revendication 1, dans lequel
la partie d'extraction d'informations de congestion (13) est adaptée pour extraire les groupes d'informations de congestion pour une pluralité de types respectifs des niveaux de congestion dans l'ordre ;
la partie de création de zone de niveau de congestion égal (13) est adaptée pour créer une pluralité de types des zones de niveau de congestion égal qui correspondent respectivement aux groupes d'informations de congestion extraits par la partie d'extraction d'informations de congestion (13) ; et
la partie de commande d'affichage (13) est adaptée pour afficher la pluralité de types des zones de niveau de congestion égal superposée sur la zone d'affichage pour les informations cartographiques de sorte que les zones de niveau de congestion égal puissent être distinguées les unes des autres.

3. Système de navigation selon la revendication 2, dans lequel la partie de commande d'affichage (13) est adaptée pour afficher des couleurs d'affichage différenciées mutuellement pour la pluralité de types des zones de niveau de congestion égal (61A, 61B, 61C) superposée sur la zone d'affichage pour les informations cartographiques.

4. Système de navigation selon l'une quelconque des revendications 1 à 3, dans lequel
la partie de création de zone de niveau de congestion égal (13) comprend
une partie de création de liaison virtuelle (13) qui est adaptée pour créer, là où les liaisons routières contenues dans des éléments d'information de congestion pour lesquels les zones de détermination de chevauchement ne se chevauchent pas sont directement reliées dans un réseau routier, une liaison virtuelle qui joint les liaisons routières ; et
une partie de création de zone de détermination de chevauchement de jonction (13) qui est adaptée pour créer, sur la base de la liaison virtuelle, une zone de détermination de chevauchement de jonction (P100, P200) qui s'étend à la fois dans les directions transversale et longitudinale pour une distance spécifiée à partir de la liaison virtuelle, dans lequel
la partie de création de zone de niveau de congestion égal (13) est adaptée pour créer une zone de niveau de congestion égal en joignant la zone de détermination de chevauchement de jonction avec les zones de détermination de chevauchement qui chevauchent la zone de détermination de chevauchement de jonction.

5. Système de navigation selon l'une quelconque des revendications 1 à 4, dans lequel la partie de commande d'affichage (13) est adaptée pour exécuter une commande de sorte que, lorsque la zone d'affichage pour les informations cartographiques est réduite d'échelle à au moins un niveau spécifié pour un affichage de zone étendue, la zone de niveau de congestion égal est affichée superposée sur la zone d'affichage pour les informations cartographiques.
